# EUROPEAN PATENT SPECIFICATION

(11) **EP 1 252 463 B1**
(45) Date of publication and mention of the grant of the patent: **27.04.2005**
(21) Application number: 01965486.2
(22) Date of filing: 19.09.2001
(51) Int. Cl.: F16L 55/132

(54) **INFLATABLE STOPPING BAGS**
AUFBLASBARE VERSCHLUSSSTOPFEN
SACS D'OBTURATION GONFLABLES

(30) Priority: 02.11.2000 GB 0026857
(43) Date of publication of application: 30.10.2002
(73) Proprietor: Glynwed Pipe Systems Limited, West Yorkshire BD21 5NA (GB)
(72) Inventor: WELFARE, Andrew, Glynwed Pipe Systems Limited, Keighley, West Yorkshire BD21 5NA (GB)
(74) Representative: Holmes, Matthew Peter
(86) International application number: PCT/GB2001/004163
(87) International publication number: WO 2002/037010

(56) References cited:
- EP-A- 0 085 915
- GB-A- 1 311 017
- US-A- 3 298 398
- US-A- 5 934 311

## Description

This invention relates to inflatable stopping used to block the bore of a fluid conduit and provides a method and apparatus for regulating the pressure in such stopping bags when in use. Particularly, but not exclusively, the present invention provides a method and apparatus for regulating the pressure within stopping bags designed to be inserted through a hole drilled in a liquid conduit, such as a water mains pipe, and then subsequently inflated to form a sealed blockage in the pipe.

Inflatable stopping bags are widely used within the gas industry for temporarily stopping the flow through a section of an in-service gas mains so that maintenance work can be performed on a section of the pipe without removing the whole pipe from service. Typically, see, for instance, document US-A 5 934 311, two bags are used to seal the pipe upstream and downstream of the section to be worked upon. The bags are inserted in a deflated state through respective holes drilled in the pipe wall and then inflated into contact with the inner wall of the pipe to block the pipe and isolate the section to be worked. A bypass pipe is connected to respective holes drilled upstream and downstream of the isolated section of the pipe to allow a gas flow to bypass the stopping bags and thus maintain service.

Although such stopping bag systems are widely used in the gas industry they have to date had no significant use in the water industry. One reason for this is that the relatively high density and pressure of water within water mains (which can be at a pressure some ten times higher than that commonly found in gas mains) exerts much higher mechanical forces on the stopping bag apparatus which can tend to push the bags along the pipe. Recently, however, a system has been developed by Glynwed Pipe Systems Ltd which provides a practical means of mechanically supporting the bags in position to resist the forces exerted by the relatively high pressure water. This is the subject of PCT application number GB00/03771 prior art in the meaning of Article 54(3) EPC.

A further difficulty which is experienced when using stopping bag systems in a water pipe is that the pressure in the pipe fluctuates in response to changing demand. Whereas in gas mains changes in demand have little effect on the pressure of the gas (which is compressible) the pressure can vary quite widely in a water main as demand changes due to the incompressible nature of water. There is therefore a risk that if the water pressure rises significantly above the pressure in the stopping bag water may leak past the bag. There is also the potential problem that if the pressure in the water mains drops significantly below the pressure in the bag the bag may burst.

It is an object of the present invention to provide a way of obviating or mitigating the potential problems mentioned above.

According to a first aspect of the present invention there is provided a method of controlling the fluid pressure of an inflatable stopping bag used to block the fluid flow through a fluid conduit, the method comprising pressurising the bag using a pressure regulator which operates to regulate the pressure of the bag as a function of the instantaneous pressure in the pipe upstream of the stopping bag.

According to a second aspect of the present invention there is provided apparatus for regulating the pressure in an inflatable stopping bag for use in blocking a fluid conduit, the apparatus comprising a pressure regulator which automatically regulates the pressure in the stopping bag when in use in response to the instantaneous pressure within the fluid conduit upstream of the stopping bag.

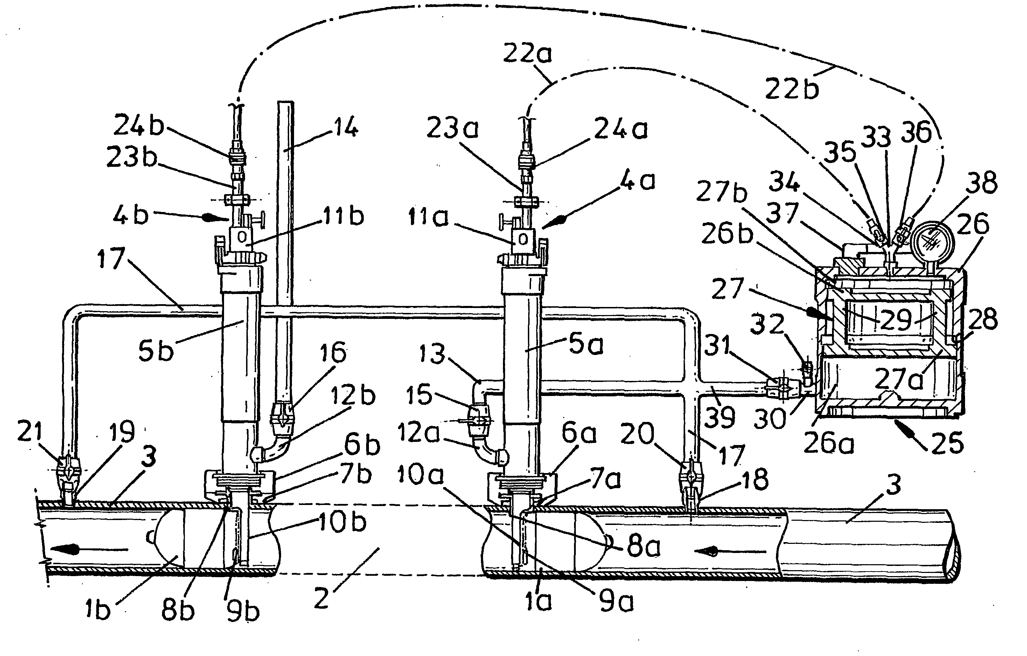

A specific embodiment of the present invention will now be described, by way of example only, with reference to the accompanying drawing which is a schematic illustration of an embodiment of the present invention incorporated in a double bag stopping apparatus designed for blocking flow through a water mains pipe.

The invention is illustrated in use with a stopping bag system according to Glynwed Pipe Systems Limited PCT Application Number GB00/03771 mentioned above, which discloses one particular form of stopping bag apparatus which is particularly suited for use in water pipes.

The apparatus in accordance with the invention described below, can however be used with any conventional stopping bag system and thus details of the stopping bag insertion and support apparatus will be only briefly described.

Referring to the drawing, the illustrated stopping bag system is a double bag system comprising two identical stopping bags 1a and 1b installed upstream and downstream of the working section 2 of a water mains pipe 3. In the drawing the bags 1a and 1b are shown in their inflated state following insertion via respective bag insertion assemblies 4a and 4b which are themselves supported within conventional machine housings 5a and 5b. The machine housings 5a and 5b are each mounted to a machine base 6a and 6b which may be secured to the pipe 2 by a chain or the like (not shown) and sealed with respect of the pipe by an annular sealing member 7a and 7b. each machine base 6a, 6b houses a sliding plate valve (not shown in detail) to allow access to the interior of the pipe through holes 8a, 8b. Each machine base 6a, 6b thus provides a platform to which different machines can be mounted to perform operations on the pipe 3. For instance, the machine bases 6a and 6b are initially used to support conventional drilling apparatus used to drill the holes 8a, 8b in the pipe 2 through which the bags 1a and 1b are then inserted.

Each stopping bag apparatus comprises a support device 9a,9b mounted to the end of a respective post 10a,10b which is an extension of a bag insertion tube 11a, 11b. The support devices 9a,9b support the inflated bags to resist the forces exerted on the bags in use by the water pressure within the pipe 3.

Each of the machine assemblies 4a and 4b has a side pipe 12a, 12b which are connected to a recharge pipe 13 and a vent pipe 14 respectively by way of valved couplings 15 and 16. The recharge pipe 13 provides a conduit for re-filling the working section of pipe 3 prior to removal of the bags if necessary once the work is complete. The vent pipe 14 can be used to release air during the re-filling operation.

The recharge pipe 13 feeds from a bypass pipe 17 which is connected between upstream and downstream bypass nipples 18 and 19 each of which is provided with a respective valve 20 and 21 to control flow through the bypass pipe 17. The bypass pipe 17 is provided to allow water to bypass the working section 2 of pipeline whilst work is being carried out and therefore maintain a water supply downstream of the stopping bag apparatus. In the illustration the bypass pipe 17 is relatively narrow compared to the mains pipe 3 but may be much larger in practice.

As mentioned at the beginning of this description, the details of the stopping bag apparatus itself, and the manner of its installation, may be entirely conventional and thus the particular apparatus illustrated has only been described above in brief outline. In use the bags 1a, 1b are inserted into the pipe 3 through the apertures 8a, 8b in a deflated state by lowering the bag insertion tubes 11a, 11b through the machine assemblies 5a, 5b. The bag support devices 9a, 9b are then deployed (in this instance the support devices 9a, 9b comprise a plurality of slats which are fanned out across the bore of the pipe). The bags are then inflated by pumping a suitable fluid into the bags 1a, 1b via inflation hoses 22a, 22b connected to respective inflation tubes 23a, 23b, via couplings 24a, 24b, which extend through the bag insertion tubes 11a, 11b.

The present invention provides a method and apparatus for supplying pressurised fluid to the bags 1a, 1b (via the inflation hoses 22a, 22b) to both inflate and regulate the pressure within the bags 1a, 1b. Referring to the drawing, the illustrated embodiment of the invention comprises a pressure regulator 25 which provides means for both inflating the bags 1a and 1b and for regulating the pressure in the bags 1a and 1b as a direct function of the pressure within the pipe 3 upstream of the bag 1a.

In more detail, the pressure regulator 25 comprises a cylinder 26 within which is mounted a piston assembly 27. The cylinder 26 has a relatively large diameter chamber 26a and a relatively small diameter chamber 26b, an annular shoulder 28 being defined where the two portions 26a, 26b meet (approximately mid way along the axis of the cylinder 26).

The piston assembly 27 comprises two connected pistons 27a and 27b which are connected by way of rods 29. Each of the pistons 27a and 27b comprises a disc which is sealed with respect to the internal wall of the cylinder 26 by piston rings 28a and 28b respectively. The piston 27a has a larger diameter than piston 27b and is in sliding engagement with the larger diameter cylinder chamber 26a, smaller diameter piston 27b being in sliding engagement with the wall of the smaller diameter cylinder chamber 26b. The piston assembly 27 is free to slide within the cylinder 26 so that the working volumes of the cylinder chambers 26a and 26b are variable. The pistons 27a and 27b are constrained to slide within the cylinder chambers 26a and 26b respectively by the relationship between the axial length of the rods 29 and the axial length of the cylinder 26.

The pressure regulator 25 has an inlet pipe 30 extending from the cylinder 26 and opening into the bottom of the cylinder chamber 26a. The inlet pipe 30 terminates in a valved coupling 31 and is provided with a vent valve 32. An outlet 33 is provided in the cylinder head, i.e. at the top of the cylinder chamber 26b.

Since in the illustrated embodiment the regulator 25 is used to inflate and pressurise two stopping bags 1a, 1b the outlet 33 is fitted with a Y piece 34 which is connected to bag inflation hoses 22a and 22b by way of valves 35 and 36 respectively. The cylinder head is also provided with a removable plug 37 which may be removed to allow the cylinder chamber 26b to be quickly filled or emptied of water. A pressure gauge 38 is provided to indicate the pressure within the cylinder chamber 26b.

The drawing shows the apparatus in use with the bags 1a and 1b already inflated. However, the pressure regulator 25 has a duel function in this embodiment, i.e. it is used to initially inflate the bags 1a, 1b as well as to regulate the pressure within them. Operation of the pressure regulator 25 to both inflate the stopping bags 1a and 1b and regulate the pressure within them will now be described.

Prior to operation the cylinder chamber 26b is filled with water so that the piston assembly 27 lies at or near the bottom of its stroke. The inlet pipe 30 is then connected to an offshoot 39 of the bypass pipe 17 with the valve 31 closed. The inflation hoses 22a and 22b are connected to the Y piece 34, again with the valves 35 and 36 closed. Once the regulator 25 has been correctly connected the valves 31, 34 and 35 are opened.

When the valve 31 is opened the pressure within the cylinder chamber 26a rises to that of the water within the pipe 3 upstream of the bagging apparatus. This exerts a force on the piston 27a which is greater than that exerted on piston 27b by the water pressure within cylinder chamber 26b. The piston assembly 29 is driven upward by the pressure within the cylinder chamber 26a thereby forcing water out of the cylinder chamber 26b and into the bags 1a, 1b via inflation hoses 22a and 22b, thereby inflating the bags. As the bags 1a, 1b are inflated the pressure within the bags, and thus within the cylinder chamber 26b, increases. The piston assembly 27 will continue to force water into the bags 1a, 1b until the force exerted on the piston 27b equals that exerted on piston 27a, i.e. equilibrium is reached. It will, however, be appreciated that the force exerted on each piston is a function of the pressure within the respective cylinder chamber 26a, 26b and the surface area of the piston 27a, 27b. Thus, since the piston 27b has a smaller surface area than the piston 27a, the pressure in chamber 26b will be higher than the pressure in chamber 26a when the equilibrium is reached. The pistons are relatively sized in this way to ensure that the pressure within the bags 1a and 1b is slightly greater than that within the pipe 2 to provide an effective seal. Indeed, it has been found that to provide an effective seal the bags should preferably be pressurised to approximately 1.18 times the pressure within the pipe 2 upstream of the bag. This is readily achieved by ensuring that the area of the piston 27a is 1.18 times as big as the area of piston 27b.

Once the bag has been inflated, the pressure within the bags 1a and 1b is automatically regulated as a function of the pressure upstream of the pipe. That is, if the pressure in the pipe 3 drops the pressure in the chamber 26a will drop so that the force exerted on the piston 27a will decrease allowing water to be forced back into the chamber 26b from the bags until the force across the piston assembly 27 has again been equalised. The reverse will of course occur should the pressure in the pipe 3 increase. It will be appreciated that as the pressure fluctuates in the pipe a corresponding fluctuation will occur in the pressure of the bags 1a and 1b which will always remain at a predetermined proportion of the pressure in the pipe 3 (eg 1.18 times greater than the pressure in the pipe).

Thus, the pressure regulator 25 operates both to inflate the bags 1a and 1b and to ensure that the pressure within the bags is regulated as a function of the pressure in the pipe 3 upstream of the bag installation. Moreover, the particular pressure regulator illustrated achieves this without the requirement for any external power source, since the driving force is provided by the water pressure within the pipe 3. The gauge 38 provides a constant reading of the pressure within chamber 26a and thus the pressure within the bags 1a and 1b. It will also be appreciated that because of the simple operation of the regulator 25 there is no delay between changes in the pressure within the pipe 3 and the bag 5.

Once the bags have been inflated, the downstream bypass valve 21 could be opened (if it is not already open) to provide flow past the working section of the pipe for as long as the work has been carried out. At this time the recharge valve 15 will be closed. When the work is complete the recharge valve 15 is opened to refill the working section of the pipe 2. Once this has been refilled, the pressure unit control valve 3 is closed and the vent valve 32 provided in the inlet pipe 30 is opened. Water is then discharged via the vent valve 32 from the chamber 26a as water is forced back into chamber 26b from the pressurised bags 1a and 1b. In other words, opening the vent valve 32 allows the bags to deflate re-establishing flow through the pipe section 2. Once the bags have been deflated the hose valves 35 and 36 may be closed and the hoses 22a and 22b disconnected from the bag insulation apparatus. The bags and other machinery may then be removed and the holes 8a, 8b in the pipe closed in accordance with conventional procedures.

The particular form of pressure regulator illustrated is advantageously simple in construction and operation. It can be employed in the relatively hostile environments that may be found when working on pipe lines requiring no supervision and little maintenance. A particularly important advantage of the regulator illustrated is that it requires no external power source as the driving force is provided by the water within the pipe line 3. In addition, the regulator functions both to initially inflate the bags as well as to regulate the pressure within them once they are inflated. It will be appreciated, however, that many modifications could be made to the regulator.

For instance, the relative sizes of the pistons can be altered to modify the ratio of the pressure within the pipe line 3 and within the bags 1a and 1b. Other details of the particular piston arrangement can of course vary widely. The function of this particular type of regulator in which the water pressure in the bags is controlled directly as a function as the pressure in the pipes just requires two pistons mechanically linked together. For instance, the two pistons could move in quite separate chambers.

The regulator need not be used to initially inflate the bags and some other means could be provided to inflate the bags prior to connection of the regulator. In addition, although water has been found to be a particularly useful medium to inflate the bags other fluids could be used. Liquids are however preferred due to their incompressible nature.

The regulator illustrated could be modified to take advantage of the water in the pipe 3 to fill the chamber 20b prior to inflation of the bags. This could be achieved by the provision of valves which initially function to allow inlet water to fill the chamber 26a but which automatically close when the chamber is full to allow the pressurisation of the bags to begin.

Whilst the illustrated embodiment of the invention is advantageously simple, alternative embodiments might include pressure regulators driven by an external power source and which are provided with compressors etc to regulate the pressure in the bags 1 and 2 in response to the pressure in the pipe 3. The essence of the invention is the provision of a pressure regulator which automatically regulates the pressure within the bags in response to changes in the pressure within the pipe line 3. This could include microprocessor controlled systems which employ electronic transducers to monitor the pressure in the pipeline 3 and to control a pump/compressor and vent valves etc to regulate the pressure in bags 1a and 1b accordingly.

Whereas the invention is expected to be particularly useful in conjunction with stopping bags used in water pipes there is of course no reason why the invention cannot be used to regulate the pressure of stopping bags used in other applications and is thus not limited to stopping systems designed for water pipes, or indeed liquid pipes.

Other possible modifications will be readily apparent to the appropriately skilled person.

## Claims

1. A method of controlling the fluid pressure of an inflatable stopping bag used to block the fluid flow through a fluid conduit, the method comprising:
pressurising the bag using a pressure regulator which operates to regulate the pressure of the bag as a function of the instantaneous pressure in the pipe upstream of the stopping bag.

2. A method according to claim 1, wherein means are provided for transmitting the pressure of the fluid in the pipe upstream of the stopping bag to the pressure regulator, said transmitted pressure providing the force required to pressurise the stopping bag.

3. A method according to claim 2, wherein the pressure regulator is connected directly between the pipe and the bag via a first fluid connection which is made between the pressure regulator and the pipe upstream of the stopping bag to transmit the pressure of the pipeline to the pressure regulator, and a second fluid connection from the pressure regulator to the stopping bag to transmit pressure to the stopping bag, wherein the pressure maintained in the second fluid connection is regulated in direct response to changes of pressure in the first fluid connection.

4. A method according to claim 3, wherein the pressure regulator comprises a first fluid chamber in fluid communication with said first fluid connection, a second fluid chamber in communication with said second fluid connection, a first piston moveable within said first fluid chamber in response to changes in pressure within the first chamber, and a second piston connected to said first piston which transmits the force exerted on the first piston to the fluid within the second chamber and thus to the fluid within the second fluid connection and stopping bag.

5. A method according to claim 4, wherein the dimensions of the first and second chambers and first and second pistons are selected so that when the force exerted on the first piston by the fluid within the first chamber equals the force exerted on the second piston by the fluid within the second chamber, the pressure in the second chamber is higher than the pressure within the first chamber by a fixed predetermined proportion, such that the pressure maintained within the stopping bag is always a fixed proportion of the pressure within the pipe upstream of the stopping bag.

6. A method according to any preceding claim, including the step of initially inflating the stopping bag using fluid supplied to the stopping bag from the pressure regulator.

7. A method according to any preceding claim, wherein the fluid required for pressurising the stopping bag is supplied to the pressure regulator from the pipe upstream of the stopping bag.

8. A method according to any preceding claim wherein the fluid conduit is a water pipeline.

9. A method according to any preceding claim, wherein the fluid used to pressurise the stopping bag is water.

10. Apparatus for regulating the pressure in an inflatable stopping bag for use in blocking a fluid conduit, the apparatus comprising a pressure regulator which automatically regulates the pressure in the stopping bag when in use in response to the instantaneous pressure within the fluid conduit upstream of the stopping bag.

11. Apparatus according to claim 10, further comprising means for transmitting the pressure of the fluid in the pipe upstream of the stopping bag to the pressure regulator, said transmitted pressure providing the force required to pressurise the stopping bag.

12. Apparatus according to claim 10 or 11, wherein the pressure regulator operates to maintain the pressure in the stopping bag at a predetermined proportion of the instantaneous pressure of the fluid in the pipe upstream of the stopping bag.

13. Apparatus according to any one of claims 10 to 12, wherein the pressure regulator comprises a first piston moveable in a first piston chamber and a second piston moveable in a second piston chamber, the first chamber in use being pressurised to the same pressure as the fluid upstream of the stopping bag, the second piston chamber in use being pressurised to the same pressure as the fluid used to inflate the stopping bag, wherein the first and second pistons are connected such that the force exerted on the first piston by fluid in the first piston chamber opposes the force exerted on the second piston by the fluid in the second piston chamber, so that the pistons tend to move to equalise the force exerted on each piston as pressure within the pipe varies, thereby regulating the pressure within the stopping bag in direct response to changes in pressure in the pipe.

14. Apparatus according to claim 13, wherein the first and second piston chambers are portions of a single cylinder, first and second pistons being connected to reciprocate together along the axis of the cylinder.

15. Apparatus according to anyone of claims 13 or 14, wherein the relative dimensions of the pistons and piston chambers are proportioned such that when the force exerted on each of the pistons is equalised the pressure within the second chamber is greater than the pressure within the first chamber so that the pressure in the stopping bag is always greater than the pressure in the pipe upstream of the stopping bag.

16. Apparatus according to anyone of claims 13 to 15, comprising a port for filling said second chamber with fluid which fluid in use is used to inflate the stopping bag as the pistons move in response to fluid supplied to the first chamber from the pipe upstream of the stopping bag.

17. Apparatus according to claim 16, wherein valve means are provided for filling said second chamber with fluid from the pipe upstream of the stopping bag prior to pressurisation of the stopping bag.

## Patentansprüche

1. Verfahren zum Steuern des Fluiddruckes eines aufblasbaren Verschlußstopfens, der verwendet wird, um den Fluidstrom durch einen Fluidkanal zu blockieren, wobei das Verfahren aufweist:
Unterdrucksetzen des Stopfens bei Benutzung eines Druckreglers, der funktioniert, um den Druck des Stopfens als Funktion des momentanen Druckes im Rohr stromaufwärts vom Verschlußstopfen zu regulieren.

2. Verfahren nach Anspruch 1, bei dem eine Einrichtung für das Übertragen des Druckes des Fluids im Rohr stromaufwärts vom Verschlußstopfen zum Druckregler bereitgestellt wird, wobei der übertragene Druck die Kraft bereitstellt, die für das Unterdrucksetzen des Verschlußstopfens erforderlich ist.

3. Verfahren nach Anspruch 2, bei dem der Druckregler direkt zwischen dem Rohr und dem Stopfen über eine erste Fluidverbindung, die zwischen dem Druckregler und dem Rohr stromaufwärts vom Verschlußstopfen zustande gebracht wird, um den Druck der Rohrleitung zum Druckregler zu übertragen, und eine zweite Fluidverbindung vom Druckregler zum Verschlußstopfen verbunden ist, um Druck zum Verschlußstopfen zu übertragen, wobei der in der zweiten Fluidverbindung aufrechterhaltene Druck als direkte Reaktion auf Veränderungen des Druckes in der ersten Fluidverbindung reguliert wird.

4. Verfahren nach Anspruch 3, bei dem der Druckregler aufweist: eine erste Fluidkammer in Strömungsverbindung mit der ersten Fluidverbindung; eine zweite Fluidkammer in Verbindung mit der zweiten Fluidverbindung; einen ersten Kolben, der innerhalb der ersten Fluidkammer als Reaktion auf Veränderungen beim Druck innerhalb der ersten Kammer beweglich ist; und einen zweiten Kolben, der mit dem ersten Kolben verbunden ist, der die Kraft überträgt, die am ersten Kolben auf das Fluid innerhalb der zweiten Kammer und daher auf das Fluid innerhalb der zweiten Fluidverbindung und den Verschlußstopfen ausgeübt wird.

5. Verfahren nach Anspruch 4, bei dem die Abmessungen der ersten und zweiten Kammer und des ersten und zweiten Kolbens so ausgewählt werden, daß, wenn die Kraft, die auf den ersten Kolben durch das Fluid innerhalb der ersten Kammer ausgeübt wird, gleich der Kraft ist, die auf den zweiten Kolben durch das Fluid innerhalb der zweiten Kammer ausgeübt wird, der Druck in der zweiten Kammer um einen konstanten vorgegebenen Anteil höher ist als der Druck innerhalb der ersten Kammer, so daß der innerhalb des Verschlußstopfens aufrechterhaltene Druck immer ein konstanter Anteil des Druckes innerhalb des Rohres stromaufwärts vom Verschlußstopfen ist.

6. Verfahren nach einem der vorhergehenden Ansprüche, das den Schritt des anfänglichen Aufblasens des Verschlußstopfens bei Verwendung von Fluid umfaßt, das dem Verschlußstopfen vom Druckregler zugeführt wird.

7. Verfahren nach einem der vorhergehenden Ansprüche, bei dem das für das Unterdrucksetzen des Verschlußstopfens erforderliche Fluid zum Druckregler vom Rohr stromaufwärts vom Verschlußstopfen zugeführt wird.

8. Verfahren nach einem der vorhergehenden Ansprüche, bei dem der Fluidkanal eine Wasserrohrleitung ist.

9. Verfahren nach einem der vorhergehenden Ansprüche, bei dem das Fluid, das für das Unterdrucksetzen des Verschlußstopfens verwendet wird, Wasser ist.

10. Vorrichtung zum Regulieren des Druckes in einem aufblasbaren Verschlußstopfen für eine Verwendung beim Blockieren eines Fluidkanals, wobei die Vorrichtung einen Druckregler aufweist, der den Druck im Verschlußstopfen automatisch reguliert, wenn er als Reaktion auf den momentanen Druck innerhalb des Fluidkanals stromaufwärts vom Verschlußstopfen in Betrieb ist.

11. Vorrichtung nach Anspruch 10, die außerdem eine Enrichtung für das Übertragen des Druckes des Fluids im Rohr stromaufwärts vom Verschlußstopfen zum Druckregler aufweist, wobei der übertragene Druck die für das Unterdrucksetzen des Verschlußstopfens erforderliche Kraft liefert.

12. Vorrichtung nach Anspruch 10 oder 11, bei der der Druckregler funktioniert, um den Druck im Verschlußstopfen auf einem vorgegebenen Anteil des momentanen Druckes des Fluids im Rohr stromaufwärts vom Verschlußstopfen zu halten.

13. Vorrichtung nach einem der Ansprüche 10 bis 12, bei der der Druckregler einen ersten Kolben, der in einer ersten Kolbenkammer beweglich ist, und einen zweiten Kolben aufweist, der in einer zweiten Kolbenkammer beweglich ist, wobei die erste Kammer bei Benutzung auf den gleichen Druck unter Druck gesetzt wird wie das Fluid stromaufwärts vom Verschlußstopfen, wobei die zweite Kolbenkammer bei Benutzung auf den gleichen Druck unter Druck gesetzt wird wie das Fluid, das zum Aufblasen des Verschlußstopfens verwendet wird, wobei der erste und zweite Kolben so verbunden werden, daß die auf den ersten Kolben durch das Fluid in der ersten Kolbenkammer ausgeübte Kraft der Kraft entgegenwirkt, die auf den zweiten Kolben durch das Fluid in der zweiten Kolbenkammer ausgeübt wird, so daß die Kolben zur Bewegung neigen, um die Kraft auszugleichen, die auf jeden Kolben ausgeübt wird, während sich der Druck innerhalb des Rohres verändert, wodurch der Druck innerhalb des Verschlußstopfens als direkte Reaktion auf Veränderungen, beim Druck im Rohr reguliert wird.

14. Vorrichtung nach Anspruch 13, bei der die erste und die zweite Kolbenkammer Abschnitte eines einzelnen Zylinders sind, wobei der erste und der zweite Kolben verbunden sind, um sich zusammen längs der Achse des Zylinders hin- und herzubewegen.

15. Vorrichtung nach einem der Ansprüche 13 oder 14, bei der die relativen Abmessungen der Kolben und der Kolbenkammern so proportioniert sind, daß, wenn die auf jeden der Kolben ausgeübte Kraft ausgeglichen wird, der Druck innerhalb der zweiten Kammer größer ist als der Druck innerhalb der ersten Kammer, so daß der Druck im Verschlußstopfen immer größer ist als der Druck im Rohr stromaufwärts vom Verschlußstopfen.

16. Vorrichtung nach einem der Ansprüche 13 bis 15, die eine Öffnung für das Füllen der zweiten Kammer mit Fluid aufweist, wobei das Fluid bei Benutzung verwendet wird, um den Verschlußstopfen aufzublasen, während sich die Kolben als Reaktion auf das Fluid bewegen, das der ersten Kammer vom Rohr stromaufwärts vom Verschlußstopfen zugeführt wird.

17. Vorrichtung nach Anspruch 16, bei der eine Ventileinrichtung für das Füllen der zweiten Kammer mit Fluid vom Rohr stromaufwärts vom Verschlußstopfen vor dem Unterdrucksetzen des Verschlußstopfens bereitgestellt wird.

## Revendications

1. Procédé de contrôle de la pression de fluide d'un sac d'obturation gonflable utilisé pour bloquer l'écoulement de fluide à travers une conduite de fluide, le procédé comprenant l'étape ci-dessous:
mise sous pression du sac par l'intermédiaire d'un régulateur de pression servant à régler la pression du sac en fonction de la pression instantanée existant dans le tuyau en amont du sac d'obturation.

2. Procédé selon la revendication 1, comprenant des moyens pour transmettre la pression du fluide existant dans le tuyau en amont du sac d'obturation vers le régulateur de pression, ladite pression transmise fournissant la force nécessaire pour mettre le sac d'obturation sous pression.

3. Procédé selon la revendication 2, dans lequel le régulateur de pression est connecté directement entre le tuyau et le sac par une première connexion de fluide établie entre le régulateur de pression et le tuyau en amont du sac d'obturation, pour transmettre la pression de la conduite vers le régulateur de pression, et d'une deuxième connexion de fluide établie du régulateur de pression vers le sac d'obturation pour transmettre la pression vers le sac d'obturation, la pression maintenue dans la deuxième connexion de fluide étant réglée en réponse directe à des changements de la pression dans la première connexion de fluide.

4. Procédé selon la revendication 3, dans lequel le régulateur de pression comprend une première chambre de fluide, en communication de fluide avec ladite première connexion de fluide, une deuxième chambre de fluide, en communication avec ladite deuxième connexion de fluide, un premier piston, pouvant se déplacer dans ladite, première chambre de fluide en réponse à des changements de la pression dans la première chambre, et un deuxiéme piston connecté audit premier piston, transmettant la force exercée sur le premier piston vers le fluide dans la deuxième chambre et donc vers le fluide dans la deuxième connexion de fluide et le sac d'obturation.

5. Procédé selon la revendication 4, dans lequel les dimensions des première et deuxième chambres et des premier et deuxième pistons sont sélectionnées de sorte que lorsque la force exercée sur le premier piston par le fluide dans la première chambre est égale à la force exercée sur le deuxième piston par le fluide dans la deuxième chambre, la pression dans la deuxième chambre dépasse la pression dans la première chambre d'une proportion prédéterminée, de sorte que la pression maintenue dans le sac d'obturation correspond toujours à une proportion fixe de la pression dans le tuyau en amont du sac d'obturation.

6. Procédé selon l'une quelconque des revendications précédentes, englobant l'étape de gonflement initial du sac d'obturation en utilisant le fluide amené vers le sac d'obturation par le régulateur de pression.

7. Procédé selon l'une quelconque des revendications précédentes, dans lequel le fluide requis pour la mise sous pression du sac d'obturation est amené vers le régulateur de pression à partir du tuyau en amont du sac d'obturation.

8. Procédé selon l'une quelconque des revendications précédentes, dans lequel la conduite de fluide est une conduite d'eau.

9. Procédé selon l'une quelconque des revendications précédentes, dans lequel le fluide utilisé pour la mise sous pression du sac d'obturation est de l'eau.

10. Dispositif de régulation de la pression dans un sac d'obturation gonflable destiné à bloquer une conduite de fluide, le dispositif comprenant un régulateur de pression réglant automatiquement la pression dans le sac d'obturation en service, en réponse à la pression instantanée existant dans la conduite de fluide en amont du sac d'obturation.

11. Dispositif selon la revendication 10, comprenant en outre un moyen pour transmettre la pression du fluide existant dans le tuyau en amont du sac d'obturation vers le régulateur de pression, ladite pression transmise fournissant la force requise pour la mise sous pression du sac d'obturation.

12. Dispositif selon les revendications 10 ou 11, dans lequel le régulateur de pression est destiné à maintenir la pression dans le sac d'obturation à une proportion prédéterminée de la pression instantanée du fluide existant dans le tuyau en amont du sac d'obturation.

13. Dispositif selon l'une quelconque des revendications 10 à 12, dans lequel le régulateur de pression comprend un premier piston, pouvant se déplacer dans une première chambre de piston, et un deuxième piston, pouvant se déplacer dans une deuxième chambre de piston, la première chambre étant en service mise à la même pression que celle du fluide en amont du sac d'obturation, la deuxième chambre de piston étant en service mise à la même pression que celle du fluide servant à gonfler le sac d'obturation, les premier et deuxième pistons étant connectés de sorte que la force exercée sur le premier piston par le fluide dans la première chambre de piston est opposée à la force exercée sur le deuxième piston par le fluide dans la deuxième chambre de piston, de sorte que les pistons tendent à se déplacer pour égaliser la force exercée sur chaque piston, lors d'un changement de la pression dans le tuyau, assurant ainsi la régulation de la pression dans le sac d'obturation en réponse directe à des changements de la pression dans le tuyau.

14. Dispositif selon la revendication 13, dans lequel les première et deuxième chambres de piston constituent des parties d'un seul cylindre, les premier et deuxième pistons étant connectés de sorte à effectuer un déplacement alternatif commun le long de l'axe du cylindre.

15. Dispositif selon l'une quelconque des revendications 13 ou 14, dans lequel les dimensions relatives des pistons et des chambres de piston sont proportionnées de sorte que lorsque la force exercée sur chacun des pistons est égalisée, la pression dans la deuxième chambre est supérieure à la pression dans la première chambre, de sorte que la pression dans le sac d'obturation est toujours supérieure à la pression dans le tuyau en amont du sac d'obturation.

16. Dispositif selon l'une quelconque des revendications 13 à 15, comprenant un orifice pour remplir ladite deuxième chambre de fluide, ce fluide étant utilisé en service pour gonfler le sac d'obturation lors du déplacement des pistons en réponse à l'alimentation en fluide de la première chambre, à partir du tuyau en amont du sac d'obturation.

17. Dispositif selon la revendication 16, dans lequel des moyens de soupape sont destinés à remplir ladite deuxième chambre de fluide à partir du tuyau en amont du sac d'obturation avant la mise sous pression du sac d'obturation.
